# FASCICULE DE BREVET EUROPEEN

(11) **EP 3 527 412 B1**
(45) Date de publication et mention de la délivrance du brevet: **04.05.2022**
(21) Numéro de dépôt: 19156724.7
(22) Date de dépôt: 12.02.2019
(51) Int. Cl.: B60K 6/387, B60K 6/547, F16D 13/38, B60K 6/48, B60K 6/40, F16D 25/0638, F16D 25/10, F16D 21/06

(54) **DISPOSITIF DE TRANSMISSION POUR VEHICULE HYBRIDE**
GETRIEBEVORRICHTUNG FÜR EIN HYBRIDFAHRZEUG
TRANSMISSION DEVICE FOR HYBRID VEHICLE

(30) Priorité: 20.02.2018 FR 1851450
(43) Date de publication de la demande: 21.08.2019
(73) Titulaire: Valeo Embrayages, Amiens 80009 (FR)
(72) Inventeur: GUINOT, Thierry, 80009 AMIENS (FR); BOULET, Jérôme, 80009 AMIENS (FR); LEBEAU, Fabien, 80009 AMIENS (FR)
(74) Mandataire: Valeo Powertrain Systems

(56) Documents cités:
- EP-A1- 2 517 915
- EP-A1- 2 990 678
- WO-A1-2018/001621
- WO-A1-2018/001662
- DE-A1-102007 060 165
- DE-A1-102012 022 290
- DE-A1-102012 024 699
- DE-A1-102013 006 858
- DE-A1-102014 014 669
- FR-A1- 3 069 200
- US-A1- 2011 240 384
- US-A1- 2011 240 384

## Description

La présente invention se rapporte au domaine des transmissions pour véhicules automobiles. Elle se rapporte notamment à un dispositif de transmission destiné à être disposé, dans la chaine de transmission, entre un moteur thermique et une boîte de vitesses.

L'invention concerne en particulier les dispositifs de transmission pour un véhicule automobile de type hybride dans lequel une machine électrique est également disposée entre le moteur et la boîte de vitesses.

Dans l'état de la technique, il est connu des ensembles de transmission, disposés entre la boîte de vitesses et le moteur thermique et comportant une machine électrique et un embrayage côté moteur permettant d'accoupler en rotation le vilebrequin du moteur thermique au rotor de la machine électrique. Ainsi, il est possible de couper le moteur thermique à chaque arrêt du véhicule et de le redémarrer grâce à la machine électrique. La machine électrique peut également constituer un frein électrique ou apporter un surplus d'énergie au moteur thermique pour l'assister ou éviter que celui-ci ne cale. La machine électrique peut également assurer l'entraînement du véhicule. Lorsque le moteur tourne, la machine électrique joue le rôle d'un alternateur. Un tel ensemble de transmission peut également lier la machine électrique à la boite de vitesses par deux chemins de couples distincts comprenant chacun un embrayage de sortie et un arbre d'entrée de boite de vitesses.

Il existe des dispositifs comprenant trois organes d'actionnement distincts pour l'actionnement des trois embrayages, un embrayage d'entrée entre le moteur à combustion interne et la machine électrique et deux embrayages de sortie entre le moteur électrique et les deux arbres d'entrée d'une boite de vitesses. Dans ces dispositifs, la machine électrique comprend un stator et un rotor entrainé en rotation autour d'un axe de rotation.

Le rotor dans ce type de moteur électrique est particulièrement lourd et il existe un besoin de disposer d'un dispositif permettant de guider la rotation de ce rotor.

L'invention vise à permettre de bénéficier d'un dispositif de transmission de couple permettant un montage propre et simplifié. L'invention vise également à permettre de bénéficier d'un dispositif de transmission de couple possédant une durée de vie et une efficacité importante.

L'invention y parvient, selon l'un de ses aspects, à l'aide d'un dispositif de transmission de couple, notamment pour véhicule automobile, comprenant :
- un élément d'entrée de couple, apte à être couplé en rotation à un vilebrequin d'un moteur à combustion interne,
- un premier élément de sortie de couple, apte à être couplé en rotation à un premier arbre d'entrée d'une boîte de vitesses,
- une machine électrique tournante comprenant un stator et un rotor disposé au sens de la transmission de couple, entre l'élément d'entrée et le premier élément de sortie,
- un support de rotor supportant radialement le rotor, le support de rotor étant relié sélectivement à l'élément d'entrée par un embrayage d'entrée,
- un moyeu principal, ledit moyeu principal étant relié au premier élément de sortie par un premier embrayage de sortie, où le support de rotor comprend une face inférieure en regard du moyeu principal, ladite face inférieure comprenant une première partie et une deuxième partie,
le dispositif de transmission de couple étant caractérisé en ce que la première partie de la face inférieure du support de rotor est en liaison pivot avec le moyeu principal et la deuxième partie de la face inférieure du support de rotor est en liaison cannelée avec le moyeu principal,
le dispositif de transmission de couple comprenant en outre un élément intermédiaire de transmission de couple entre l'élément d'entrée et l'embrayage d'entrée, l'élément intermédiaire étant centré et porté radialement par une cloison transversale au moyen d'un organe de roulement.

Ainsi, un guidage par une pièce fixe permet de s'extraire d'un guidage par une pièce tournante (élément d'entrée, éléments de sortie) sujettes à des vibrations. Un tel guidage permet de guider au mieux le rotor de la machine électrique. Un tel guidage de l'élément intermédiaire permet également d'avoir un guidage à proximité de l'embrayage d'entrée qui lui garanti un bon positionnement. Ceci évite l'usure de l'embrayage d'entrée. Ainsi, le support de rotor est solidaire en rotation du moyeu principal. L'addition de la liaison pivot, entre la première partie de la face inférieure du support de rotor et le moyeu principal, avec la solidarisation en rotation, de la deuxième partie de la face inférieure du support de rotor avec le moyeu principal, permet d'obtenir une liaison encastrement entre le support de rotor et le moyeu principal. L'addition de ces deux liaisons permet de transmettre le couple entre ledit support de rotor et le moyeu principal tout en maintenant un lien robuste entre les deux éléments.

Ainsi, le dispositif dispose d'une liaison mécanique particulièrement robuste entre le rotor, via le support de rotor, et le moyeu principal, permettant de guider la rotation du rotor de façon optimisée (sans à-coup et sans risque que les différentes pièces s'entrechoquent entre elles) et sans diminution de son efficacité dans le temps. Une telle liaison mécanique permet également de transmettre le couple entre l'embrayage d'entrée et le premier embrayage de sortie sans perte de puissance. De plus, une telle liaison est démontable, permettant d'en assurer et d'en faciliter la maintenance. Cette liaison permet également d'optimiser la circulation d'un fluide de refroidissement, notamment de l'huile, adapté pour refroidir les embrayages, entre le support de rotor et le moyen principal.

Selon un aspect de l'invention, l'embrayage d'entrée et le premier embrayage de sortie sont de type multidisque, chacun des embrayages ayant un organe d'actionnement associé.

Selon un aspect de l'invention, le dispositif comprend en outre un deuxième élément de sortie de couple, apte à être couplé en rotation à un deuxième arbre d'entrée d'une boîte de vitesses, le deuxième élément de sortie étant disposé en parallèle du premier élément de sortie au sens de la transmission de couple.

Selon un aspect de l'invention, le rotor de la machine électrique tournante est disposé au sens de la transmission de couple, entre l'élément d'entrée d'une part et les premier et deuxième éléments de sortie d'autre part, et dans lequel le moyeu principal est relié sélectivement aux premier et deuxième éléments de sortie, respectivement, par le premier et un deuxième embrayages de sortie, de type multidisque, chacun des embrayages ayant un organe d'actionnement associé.

Alternativement, l'invention y parvient, selon l'un de ses aspects, à l'aide d'un dispositif de transmission de couple, notamment pour véhicule automobile, comprenant :
- un élément d'entrée de couple, apte à être couplé en rotation à un vilebrequin d'un moteur à combustion interne,
- un premier élément de sortie de couple, apte à être couplé en rotation à un premier arbre d'entrée d'une boîte de vitesses,
- un deuxième élément de sortie de couple, apte à être couplé en rotation à un deuxième arbre d'entrée d'une boîte de vitesses, le deuxième élément de sortie étant disposé en parallèle du premier élément de sortie au sens de la transmission de couple,
- une machine électrique tournante comprenant un stator et un rotor disposé au sens de la transmission de couple, entre l'élément d'entrée d'une part et les premier et deuxième éléments de sortie d'autre part,
- un support de rotor supportant radialement le rotor, le support de rotor étant relié sélectivement à l'élément d'entrée par un embrayage d'entrée de type multidisque, l'embrayage d'entrée ayant un organe d'actionnement associé,
- un moyeu principal, ledit moyeu principal étant relié sélectivement aux premier et deuxième éléments de sortie, respectivement, par un premier et un deuxième embrayage de sortie de type multidisque, chacun des embrayages ayant un organe d'actionnement associé, où le support de rotor comprend une face inférieure en regard du moyeu principal, ladite face inférieure comprenant une première partie et une deuxième partie,
le dispositif de transmission de couple étant caractérisé en ce que la première partie de la face inférieure du support de rotor est en liaison pivot avec le moyeu principal et la deuxième partie de la face inférieure du support de rotor est en liaison cannelée avec le moyeu principal,
le dispositif de transmission de couple comprenant en outre un élément intermédiaire de transmission de couple entre l'élément d'entrée et l'embrayage d'entrée, l'élément intermédiaire étant centré et porté radialement par une cloison transversale au moyen d'un organe de roulement.

Ainsi, le dispositif dispose d'une liaison mécanique particulièrement robuste entre le rotor, via le support de rotor, et le moyeu principal, permettant de guider la rotation du rotor de façon optimisée (sans à-coup et sans risque que les différentes pièces s'entrechoquent entre elles) et sans diminution de son efficacité dans le temps. Une telle liaison mécanique permet également de transmettre le couple entre l'embrayage d'entrée et les premier et deuxième embrayages de sortie sans perte de puissance. De plus, une telle liaison est démontable, permettant d'en assurer et d'en faciliter la maintenance. Cette liaison permet également d'optimiser la circulation d'un fluide de refroidissement, notamment de l'huile, adapté pour refroidir les embrayages, entre le support de rotor et le moyen principal.

Le moyeu principal permet un meilleur agencement des organes d'actionnement d'embrayages. En effet, un tel moyeu principal permet de s'extraire du besoin d'avoir plusieurs pièces distinctes pour l'agencement des organes d'actionnement. Le maintien radial est mutualisé pour les organes d'actionnement.

Selon un aspect de l'invention, les embrayages sont contenus dans au moins une chambre étanche. L'étanchéité de l'au moins une chambre dans laquelle sont disposés les embrayages est contrôlée au sein du dispositif et est indépendante de l'environnement final du dispositif.

En variante, seule une partie des embrayages peut être disposé dans la chambre étanche.

Selon un aspect de l'invention, les embrayages sont humides. La chambre étanche peut être remplie d'un fluide, notamment d'huile.

Au sens de la demande, un embrayage humide est un embrayage qui est adapté pour fonctionner dans un bain d'huile.

En variante, seuls les embrayages de sortie sont dans la chambre étanche. L'embrayage d'entrée est alors un embrayage sec disposé à l'extérieur de la chambre étanche.

En variante, seuls l'embrayage d'entrée est dans la chambre étanche. Les embrayages de sortie sont alors des embrayages secs disposés à l'extérieur de la chambre étanche.

Selon un autre aspect de l'invention, la liaison pivot entre la première partie de la face inférieure du support de rotor et le moyeu principal peut être une combinaison d'une liaison rotule et d'une liaison appui-plan. Cette combinaison de deux liaisons mécaniques permet de supprimer les mêmes degrés de liberté qu'une liaison pivot.

Selon un autre aspect de l'invention, le moyeu principal peut comprendre une face externe au moins partiellement en regard avec la face inférieure du support de rotor. La face externe peut présenter un premier épaulement circonférentielle. Au sens de l'invention, circonférentielle signifie s'étendant circonférentiellement, autour de l'axe de rotation du rotor.

En outre, la face inférieure du support de rotor peut présenter un deuxième épaulement circonférentielle.

La liaison appui-plan entre le support de rotor et le moyeu principal peut être réalisée par un contact entre le premier épaulement et le deuxième épaulement. Ce contact permet de supprimer les mêmes degrés de liberté entre le support de rotor et le moyeu principal qu'une liaison appui-plan.

Selon un autre aspect de l'invention, le dispositif de transmission de couple peut en outre comprendre au moins un organe de fixation adapté pour maintenir la liaison appui-plan entre la première partie de la face inférieure du support de rotor et le moyeu principal. Ce(s) organe(s) de fixation peuv(en)t être choisi(s) parmi des vis, des écrous ou des rivets réparties sur un pourtour de l'axe. Ce(s) organe(s) de fixation est(sont) disposé(s) radialement au même niveau que le moyeu principal. Ce(s) organe(s) de fixation permette(nt) de monter et/ou démonter facilement le dispositif. Cette facilité de démontage permet notamment de ne pas perdre l'ensemble des pièces constituant ledit dispositif en cas de défaillance de certaine d'entre elles.

Selon un autre aspect de l'invention, le moyeu principal peut présenter un premier diamètre et comprendre une face externe au moins partiellement en regard avec la face inférieure du support de rotor, ladite face externe présentant une première longueur axiale.

En outre, le support de rotor peut présenter un deuxième diamètre et la face inférieure dudit support de rotor peut présenter une deuxième longueur axiale.

Selon un autre aspect de l'invention, la première longueur axiale peut être au moins deux fois supérieure à la deuxième longueur axiale. Plus particulièrement, la première longueur axiale peut être au moins trois fois supérieure à la deuxième longueur axiale.

Selon un autre aspect de l'invention, le premier diamètre peut être inférieur au deuxième diamètre. Cette différence entre le premier diamètre et le deuxième diamètre permet d'obtenir un jeu entre le moyeu principal et le support de rotor. C'est la différence de diamètre associée à la différence de longueur entre le moyeu principal et le support de rotor qui permet de supprimer les mêmes degrés de liberté qu'une liaison rotule.

Selon un autre aspect de l'invention, l'élément intermédiaire peut être centré et porté radialement au moyen d'un organe de roulement, notamment un roulement à aiguilles, disposé à la périphérie radialement inférieure de la cloison.

Selon un autre aspect de l'invention, la cloison transversale peut être située axialement entre l'embrayage d'entrée d'une part et le premier et deuxième embrayage de sortie d'autre part. La cloison transversale peut être située axialement entre l'embrayage d'entrée d'une part et le premier embrayage de sortie d'autre part. La cloison peut être liée à l'élément intermédiaire d'une part et au support de rotor d'autre part.

Un moyen d'étanchéité peut être disposé entre l'extrémité radialement inférieure de la cloison et le support de rotor. Le moyen d'étanchéité est par exemple un joint à lèvre.

Selon un autre aspect de l'invention, le moyeu principal peut être porté radialement par un distributeur fixe au moyen d'au moins un organe de roulement, notamment un roulement à aiguilles. Un tel guidage du moyeu principal permet de lui garantir un bon positionnement. Ceci évite l'usure du moyeu principal. Le distributeur fixe peut encore être appelé support d'embrayage.

Selon un autre aspect de l'invention, l'embrayage d'entrée est décalé des embrayages de sortie en éloignement de l'élément d'entrée. L'embrayage d'entrée est ainsi du côté de la boite de vitesses et les embrayages de sortie du coté du moteur à combustion interne. Les embrayages de sortie peuvent être axialement entre l'élément d'entrée et l'embrayage d'entrée. Il existe un plan perpendiculaire à l'axe de rotation qui laisse du côté de la boite de vitesses l'embrayage d'entrée et qui laisse du côté du moteur thermique les embrayages de sortie. Ce plan ne coupe aucun des trois embrayages. Un tel agencement permet d'obtenir un dispositif compact radialement.

Selon un autre aspect de l'invention, le support de rotor peut comprendre une paroi transversale, cette paroi étant d'un même côté axial que tous les embrayages. Cette paroi peut également être du même côté axial que les organes d'actionnement. Le support de rotor peut encapsuler à la fois les embrayages et les organes d'actionnement. Le support de rotor peut délimiter en partie la chambre étanche. La paroi est ainsi simple de fabrication et robuste.

De préférence, le support de rotor ne comporte par d'autre paroi transversale de sorte que le support de rotor est simple de construction.

Le support de rotor peut en outre comprendre une pièce de transfert. La pièce de transfert peut être située radialement sous, ou radialement interne à, l'embrayage d'entrée. La pièce de transfert peut être également située sous, ou radialement interne à, l'organe d'actionnement de l'embrayage d'entrée. La pièce de transfert est, pour le passage du couple, situé entre la paroi transversale et les premier et deuxième embrayages de sortie. La pièce de transfert du support de rotor peut délimiter en partie la chambre étanche.

La pièce de transfert et la paroi transversale peuvent être une pièce unique. Alternativement la pièce de transfert et la paroi transversale sont deux pièces distinctes. La pièce de transfert et la paroi transversale peuvent être soudées l'une à l'autre.

Selon un autre aspect de l'invention, chaque organe d'actionnement peut comprendre une chambre d'actionnement délimitée en partie par le moyeu principal et par un organe d'actionnement mobile axialement par rapport au moyeu principal et apte à coopérer avec l'embrayage associé. Chaque organe d'actionnement est mobile sous l'effet de la pression du fluide dans la chambre d'actionnement. Ces organes d'actionnement sont aussi appelés organes d'actionnement de type « piston ».

Associée à la chambre d'actionnement, chaque organe d'actionnement peut comprendre une chambre de compensation délimitée en partie par l'organe d'actionnement et par le moyeu principal. Cette chambre peut également être étanche.

L'organe d'actionnement peut former une barrière entre les deux chambres. La chambre de compensation est destinée à s'opposer aux effets liés à la pression d'huile hydrodynamique de la chambre d'actionnement sur l'organe d'actionnement. L'organe d'actionnement peut ainsi être déplacé axialement par variation de pression d'huile relative des chambres d'actionnement et de compensation.

Le support de rotor peut être assemblé avec le moyeu principal, par exemple par soudure. Plus particulièrement, la paroi transversale du support de rotor, directement ou via la pièce de transfert, peut être assemblée avec le moyeu principal, par exemple par soudure. En variante, le support de rotor et le moyeu principal peuvent être d'un seul tenant.

Le support de rotor peut également comporter un manchon externe cannelé qui coopère avec le rotor. Le manchon externe peut être d'un seul tenant avec la paroi transversale ou assemblés ensemble, notamment par soudure.

Selon un autre aspect de l'invention, le moyeu principal peut être porté radialement par un distributeur fixe, pouvant encore être appelé support d'embrayage. Le distributeur peut comporter un réseau fluidique pour l'approvisionnement de chacun des organes d'actionnement. Plus particulièrement, le réseau fluidique peut permettre l'approvisionnement de chacune des chambres d'actionnement et de chacune des chambres de compensation. Le distributeur permet avantageusement de n'avoir qu'une amenée de fluide pour l'ensemble des organes d'actionnement ce qui simplifie le dispositif. Le réseau fluidique est ménagé dans une pièce fixe en rotation dont la construction et le fonctionnement sont simplifiés par rapport à une amenée de fluide dans une pièce en rotation, par exemple un arbre de boite de vitesses. Un tel dispositif permet d'avoir une seule arrivée de fluide pour l'actionnement des embrayages ce qui simplifie la fabrication du dispositif.

Selon un aspect de l'invention, le moyen principal comprend au moins un conduit, et de préférence une pluralité de conduits, adapté pour relier le réseau fluidique aux différentes chambres d'actionnement et/ou de compensation.

Selon un aspect de l'invention, le réseau fluidique débouche du côté de la boite de vitesses. Le côté de la boite de vitesse est un environnement accessible par rapport au côté en regard du moteur à combustion interne qui est lui encombré et peu accessible.

Selon un aspect de l'invention, le rotor peut être porté radialement, notamment uniquement, par le distributeur. Des roulements, notamment des roulements à aiguilles, sont prévus entre le moyeu principal et le distributeur. De préférence deux roulements sont prévus, chacun étant positionné à l'une des extrémités axiale du moyeu principal. Les organes de roulement peuvent être sur une même hauteur radiale. La fonction de support radial des organes d'actionnement et du rotor est ainsi mutualisée.

Selon un aspect de l'invention, le réseau fluidique du distributeur peut comprendre, pour chaque chambre d'actionnement, une première série de canaux axiaux, au moins un canal et de préférence deux canaux, décalés circonférentiellement, qui débouchent sur une même gorge circonférentielle, ménagée elle aussi dans le distributeur, pour alimenter en fluide les chambres d'actionnement.

En regard de chaque gorge circonférentielle, des ouvertures sont prévues dans le moyeu principal pour le passage du fluide vers chacune des chambres d'actionnement.

Le réseau fluidique peut également comprendre une deuxième série de canaux axiaux, au moins un canal et de préférence deux canaux, décalés circonférentiellement, qui débouchent sur une même gorge circonférentielle pour le passage d'un fluide de refroidissement des embrayages.

Le réseau fluidique peut également comprendre, pour chaque organe d'actionnement, une troisième série de canaux axiaux, au moins un et de préférence deux, décalés circonférentiellement qui débouchent sur une même gorge circonférentielle pour alimenter en fluide chacune des chambres de compensation. Les fluides de refroidissement et de compensation peuvent être identiques.

Pour chaque embrayage, le réseau fluidique peut comprendre une unique série de canaux axiaux pour le refroidissement et l'approvisionnement en fluide de la chambre de compensation.

De préférence, le réseau fluidique peu comprendre une première unique série de canaux axiaux pour le refroidissement des embrayages de sortie et l'approvisionnement en fluide des chambres de compensation des embrayages de sortie et une deuxième unique série de canaux axiaux pour le refroidissement de l'embrayage d'entrée et l'approvisionnement en fluide de la chambre de compensation de l'embrayage d'entrée, différent de la première unique série.

Selon un aspect de l'invention, les chambres de compensation peuvent ne pas être alimentées en fluide.

Les séries de canaux axiaux peuvent être décalés circonférentiellement deux à deux.

Des bagues d'étanchéité, par exemple en plastique, peuvent être prévues de part et d'autre de chaque gorge circonférentielle.

Le distributeur présente ainsi une périphérie externe crantée formée par la succession des gorges circonférentielles.

Selon un aspect de l'invention, les organes de roulement du moyen principal peuvent encadrer les gorges circonférentielles.

Selon un autre aspect de l'invention, les organes d'actionnement peuvent se succéder axialement. Les organes d'actionnement sont tous laissés proches de l'axe de rotation, les embrayages peuvent être disposés dans l'espace entre le rotor et lesdits organes d'actionnement. L'approvisionnement en fluide des organes d'actionnement est également simplifié.

Selon un autre aspect de l'invention, les embrayages de sortie peuvent être empilés radialement pour minimiser l'espace axial alloué aux embrayages.

En variante, les embrayages de sortie peuvent également se succéder axialement. Il existe ainsi un axe parallèle à l'axe de rotation qui coupe chacun des embrayages. L'ensemble des embrayages peuvent se succéder axialement. Un tel agencement permet d'avoir un dispositif très compact radialement et d'utiliser au mieux l'espace intérieur de la machine électrique. Un tel agencement permet de prévoir des embrayages identiques et ainsi d'améliorer l'industrialisation du dispositif.

Selon un autre aspect de l'invention, chacun des embrayages du dispositif peut comprendre :
- un porte-disques d'entrée entrainé en rotation par l'élément d'entrée concernant l'embrayage d'entrée d'une part et solidaire en rotation du support de rotor, via le moyeu principal, concernant les premier et deuxième embrayages de sortie d'autre part,
- un porte-disques de sortie solidaire en rotation du support de rotor, via le moyeu principal, concernant l'embrayage d'entrée d'une part et solidaire de l'un des premier et deuxième éléments de sortie concernant respectivement le premier et le deuxième embrayage de sortie d'autre part,
- un ensemble multidisque comprenant au moins un disque de friction solidaire en rotation de l'un des porte-disques d'entrée et de sortie, au moins deux plateaux respectivement disposés de part et d'autre de chaque disque de friction, solidaires en rotation de l'autre des porte-disques d'entrée et de sortie et des garnitures de friction disposées entre les plateaux et un disque de friction, l'embrayage décrivant une position débrayée et une position embrayée dans laquelle lesdits plateaux et le disque de friction pincent les garnitures de friction de manière à transmettre un couple entre le porte-disques d'entrée et le porte-disques de sortie.

Les garnitures peuvent être fixées sur les disques de friction, notamment par collage, notamment par rivetage, notamment par surmoulage. En variante, les garnitures sont fixées sur les plateaux.

Chaque porte-disques peut synchroniser en rotation l'ensemble des plateaux ou l'ensemble des disques de friction. Les portes-disques peuvent comporter une jupe cylindrique sur lesquelles sont montées les plateaux et les disques de friction.

Les plateaux et les disques peuvent coopérer avec les portes-disques selon une de leur périphérie radiale par complémentarité de forme. Les jupes cylindriques, les plateaux et les disques de friction peuvent par exemple être cannelés.

Selon un autre aspect de l'invention, Le porte-disques de sortie du premier embrayage de sortie est radialement à l'intérieur et le porte-disques de sortie du deuxième embrayage de sortie est radialement à l'extérieur.

De préférence, les embrayages comportent entre deux et sept disques de friction, de préférence, trois, quatre ou cinq disques de friction.

Les embrayages peuvent être de type « normalement ouvert », un effort doit être exercé par les organes de transmission de force pour transmettre un couple.

Les organes de transmission de force peuvent exercer un effort axial sur les ensembles multidisque pour déplacer les plateaux vers les disques, notamment sur un plateau d'extrémité de l'ensemble multidisque. L'actionnement est ainsi de type « poussé ».

Selon un aspect de l'invention, l'ensemble des embrayages peuvent être portés par le support de rotor et/ou le moyeu principal de sorte qu'il n'est pas nécessaire de prévoir un guidage radial spécifique. Le distributeur fixe supporte le rotor, l'ensemble des organes d'actionnement et des embrayages.

Selon un aspect de l'invention, les portes-disques d'entrée des embrayages de sortie peuvent s'étendre depuis une cloison secondaire qui s'étend radialement depuis le moyeu principal. Le support de rotor, notamment via le moyeu principal et la cloison secondaire, entraine ainsi en rotation les embrayages de sortie.

Lorsque les embrayages de sortie sont empilés radialement, les portes-disques d'entrée peuvent s'étendre d'un même côté axial. La cloison secondaire peut définir une chambre de compensation de l'un des organes d'actionnement.

La jupe cylindrique de l'élément d'entrainement peut être solidaire du porte-disques de l'embrayage d'entrée. La jupe cylindrique peut notamment être d'un seul tenant avec le porte-disques ou assemblés ensemble, notamment par soudure.

Selon un autre aspect de l'invention, le porte-disques de sortie de l'embrayage d'entrée peut être fixé en rotation au support de rotor au moyen d'une liaison cannelée et d'un circlips.

En variante le porte-disques de sortie de l'embrayage d'entrée peut être fixée rigidement au support de rotor par soudure.

Selon un autre aspect de l'invention, le dispositif peut être divisé en deux sous-ensembles indépendants :
- un premier sous-ensemble apte à être connecté au moteur à combustion interne comprenant l'élément d'entrée, les premier et deuxième embrayages de sortie et les organes d'actionnement associés, le moyeu principal et un premier carter apte à être fixé sur une partie fixe du moteur thermique, et
- un deuxième sous-ensemble apte à être connecté à la boite de vitesses comprenant la machine électrique, l'embrayage d'entrée et l'organe d'actionnement associé, le support de rotor et un deuxième carter apte à être fixée sur une partie fixe de la boite de vitesses.

Selon un autre aspect de l'invention, l'élément intermédiaire peut être partagé entre les deux sous-ensembles. L'élément intermédiaire peut comprendre une liaison interne cannelée pour le couplage en rotation des deux sous-ensembles.

Au sens de la demande, un sous-ensemble est un ensemble autonome de pièces qui se tiennent ensemble. Les sous-ensembles peuvent être manipulés séparément lors de l'assemblage.

Chaque sous-ensemble peut comprendre une partie fixe et une partie tournante.

Le deuxième carter peut être solidaire du distributeur fixe ou formé d'un seul tenant avec le distributeur.

Cette définition en sous-ensemble permet d'approvisionner indépendamment le premier sous-ensemble au fabricant du moteur thermique et le deuxième sous-ensemble au fabricant de la boite de vitesses.

Selon un autre aspect de l'invention, la machine électrique peut être une machine synchrone à aimants permanents. Une telle machine possède en grand diamètre favorable pour l'intégration des pièces du dispositif.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.
- la figure 1 est une vue en coupe axiale d'un exemple du dispositif selon l'invention,
- la figure 2 est une vue isométrique en coupe partielle du dispositif de la figure 1,

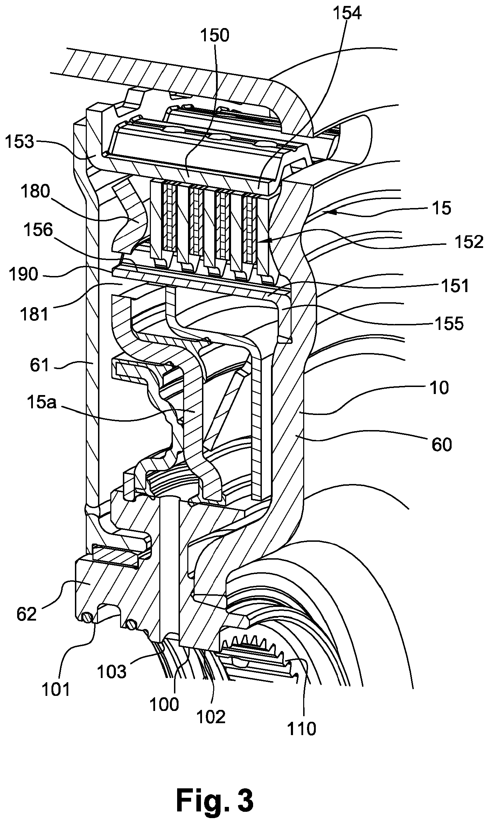

- la figure 3 est une vue partielle en coupe du deuxième sous-ensemble, et

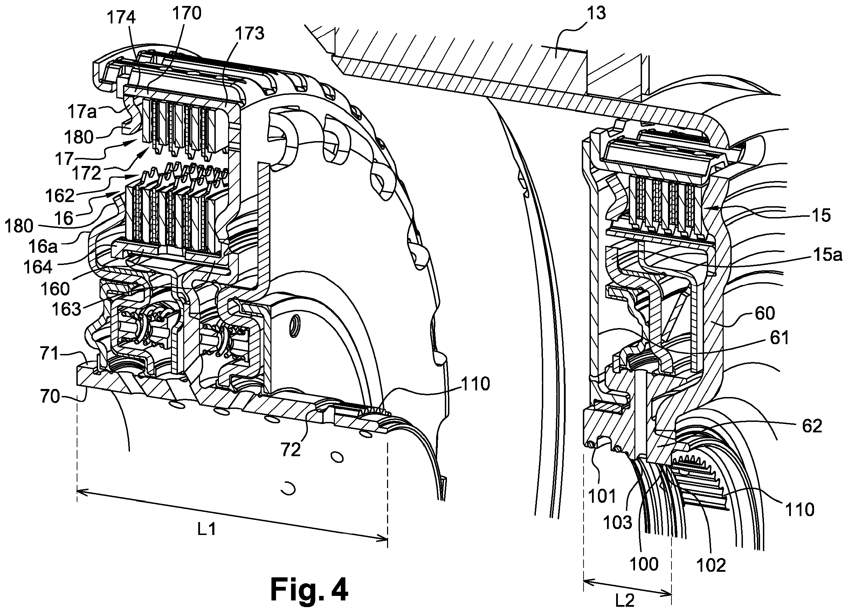

- la figure 4 est une vue partielle en coupe des deux sous-ensembles du dispositif avant leur assemblage.

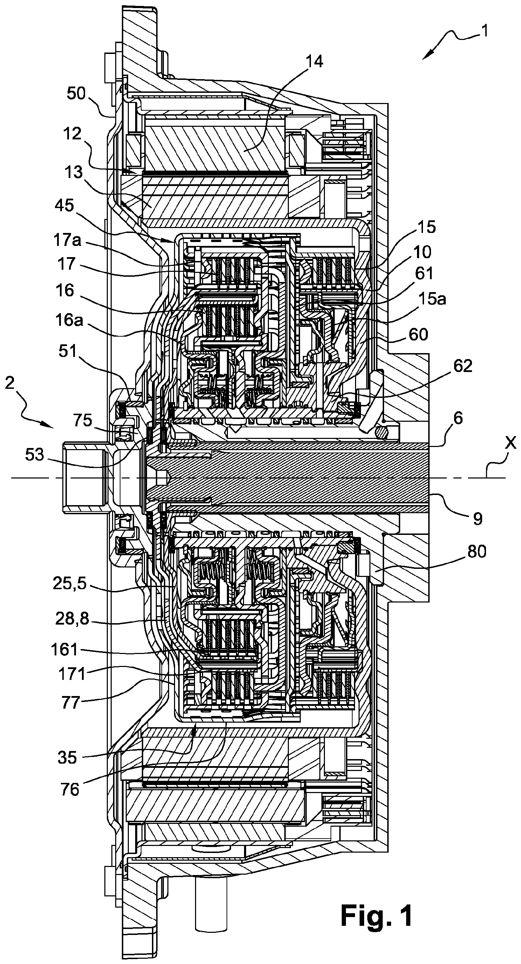

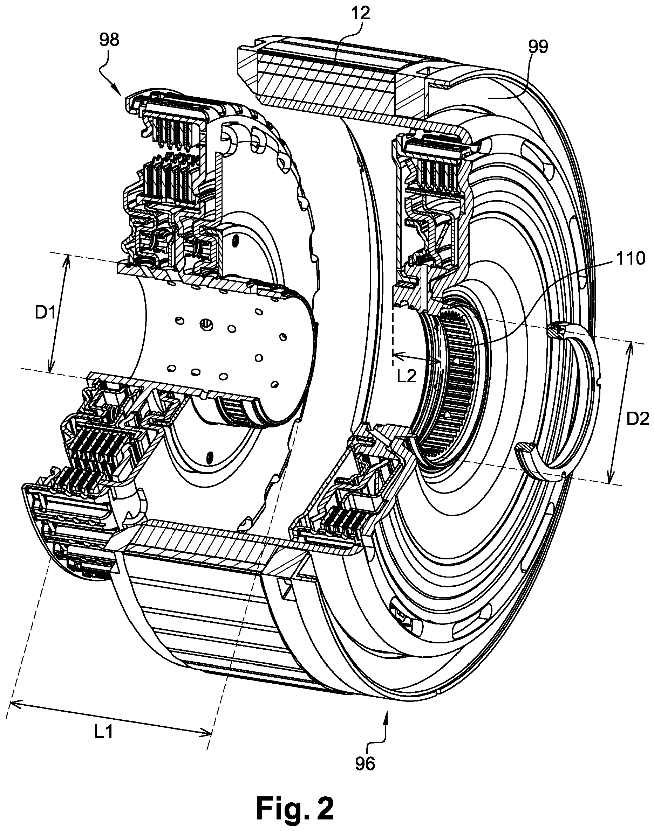

En relation avec les figures 1 et 2, on observe un dispositif de transmission de couple 1 comprenant :
- un élément d'entrée de couple 2, apte à être couplé en rotation à un vilebrequin d'un moteur à combustion interne,
- un premier élément de sortie de couple 5, apte à être couplé en rotation à un premier arbre d'entrée 6 d'une boîte de vitesses,
- un deuxième élément de sortie de couple 8, apte à être couplé en rotation à un deuxième arbre d'entrée 9 de la boîte de vitesses.

Dans les exemples considérés, le deuxième élément de sortie 8 est disposé en parallèle du premier élément de sortie 5 au sens de la transmission de couple. Chacun de ces éléments tournent autour d'un axe de rotation du dispositif X.

Le dispositif comprend également une machine électrique tournante 12 comprenant un rotor 13 et un stator 14. Le stator 14 est fixe, disposé autour du rotor 13. Le rotor 13 est disposé au sens de la transmission de couple, entre l'élément d'entrée 2 d'une part et le premier élément de sortie 5 et le deuxième élément de sortie 8 d'autre part. Le dispositif 1 comprend également un support de rotor 10 pour son maintien radial.

Dans les exemples considérés, le rotor 13 est relié sélectivement :
- à l'élément d'entrée 2 par un embrayage d'entrée 15 de type multidisque,
- au premier élément de sortie 5 par un premier embrayage de sortie 16 de type multidisque, et
- au deuxième élément de sortie 8 par un deuxième embrayage de sortie 17 de type multidisque. Chacun des embrayages 15, 16, 17 a un organe d'actionnement associé 15a, 16a, 17a.

L'embrayage d'entrée 15 peut comprendre un porte-disques d'entrée 150 entrainé en rotation par un premier élément. Le premier élément peut être l'élément d'entrée 2.

Le porte-disques d'entrée 150 s'étend axialement entre une première extrémité 153 et une deuxième extrémité 154. La première extrémité 153 est entrainée en rotation par le premier élément.

L'embrayage d'entrée 15 peut en outre comprendre un porte-disques de sortie 151 solidaire en rotation d'un deuxième élément. Le deuxième élément peut être le support de rotor 10. Le support de rotor 10 peut être solidaire en rotation du porte-disques de sortie 151 via un élément de lien, par exemple un moyeu principal 70.

Le porte-disques de sortie 151 s'étend axialement entre une première extrémité 155 et une deuxième extrémité 156 La première extrémité 155 est solidaire en rotation du deuxième élément.

L'embrayage d'entrée 15 peut en outre comprendre un ensemble multidisque 152. L'ensemble multidisque 152 peut comprendre au moins un disque de friction solidaire en rotation de l'un des porte-disques d'entrée et de sortie. L'au moins un disque de friction est par exemple solidaire en rotation du porte-disques d'entrée 150. L'ensemble multidisque 152 peut en outre comprendre au moins deux plateaux respectivement disposés de part et d'autre de chaque disque de friction. Les plateaux peuvent être solidaires en rotation de l'autre des porte-disques d'entrée et de sortie. Les plateaux sont par exemple solidaires en rotation du porte-disque de sortie 151. L'ensemble multidisque 152 peut en outre comprendre des garnitures de friction disposées entre les plateaux et un disque de friction.

L'embrayage 15 peut décrire une position débrayée et une position embrayée dans laquelle lesdits plateaux et le disque de friction pincent les garnitures de friction de manière à transmettre un couple entre le porte-disques d'entrée 150 et le porte-disques de sortie 151.

L'organe d'actionnement 15a est mobile axialement entre une position de repos et une position active dans laquelle ledit organe d'actionnement 15a exerce un effort axial sur l'ensemble multidisque 152 pour amener l'embrayage d'entrée 15 en position embrayée.

L'organe d'actionnement 15a s'étend radialement entre une première extrémité et une deuxième extrémité 180 adaptée pour exercer l'effort axial sur l'ensemble multidisque 152.

L'organe d'actionnement 15a peut comprendre au moins un évidement 181. L'au moins un évidement 181 peut être traversant. Alternativement, l'au moins un évidement 181 peut être borgne. L'au moins un évidement 181 peut se situer radialement sous la deuxième extrémité 180.

L'organe d'actionnement 15a peut comprendre une pluralité d'évidements 181. Les évidements de la pluralité d'évidements 181 sont compris entre deux et cinq. De préférence, les évidements de la pluralité d'évidements 181 sont au nombre de trois. La présence d'un nombre réduit d'évidements 181 permet de limiter les zones de fuite du fluide de refroidissement de l'embrayage tout en réalisant un guidage en rotation par rapport à l'axe de rotation X de l'organe d'actionnement 15a par rapport au support de rotor 10.

Les évidements peuvent être équirépartis circonférentiellement sur l'organe d'actionnement 15a. Par exemple, les évidements 181 sont répartis tous les 120° lorsqu'ils sont au nombre de trois. Alternativement, les évidements 181 sont répartis tous les 90° lorsqu'ils sont au nombre de quatre.

La deuxième extrémité 154 du porte-disques d'entrée 150 peut comprendre au moins un guide 190 s'étendant axialement depuis ladite deuxième extrémité 154. L'au moins un guide 190 est adapté pour être au moins partiellement compris dans l'évidemment 181. L'au moins un guide 190 peut traverser intégralement l'évidemment 181. L'au moins un guide 190 peut être solidaire en rotation de l'organe d'actionnement 15a.

L'au moins un guide 190 peut présenter une complémentarité de forme avec l'évidement 181. Cette complémentarité de forme permet de réduire au minimum les jeux entre l'au moins un guide et l'évidement afin de limiter le passage d'un fluide de refroidissement de l'embrayage, par exemple de l'huile, entre les deux éléments.

La deuxième extrémité 154 du porte-disques d'entrée 150 peut comprendre une pluralité de guides 190. Les guides de la pluralité de guides 190 sont compris entre deux et cinq. De préférence, les guides de la pluralité de guides 190 sont au nombre de trois.

Chacun des guides de la pluralité de guides 190 est adapté pour traverser un évidement 181 différent. Le nombre de guide 190 et le nombre d'évidement 181 peuvent être équivalents. Alternativement, au moins deux guides de la pluralité de guides 190 sont adaptés pour traverser un même évidement 181.

Les guides 190 peuvent être équirépartis circonférentiellement sur le porte-disque d'entrée et/ou le porte-disques de sortie. Par exemple, les guides 190 sont répartis tous les 120° lorsqu'ils sont au nombre de trois. Alternativement, les guides 190 sont répartis tous les 90° lorsqu'ils sont au nombre de quatre.

Alternativement, la deuxième extrémité 156 du porte-disques de sortie 151 peut comprendre l'au moins un guide 190 s'étendant axialement depuis ladite deuxième extrémité 156.

Alternativement ou en complément, le premier embrayage de sortie 16 peut comprendre un porte-disques d'entrée 160 entrainé en rotation par un premier élément. Le premier élément peut être le support de rotor 10. Le support de rotor 10 peut entrainer en rotation le porte-disques d'entrée 160 via un élément de lien, par exemple un moyeu principal 70.

Le porte-disques d'entrée 160 s'étend axialement entre une première extrémité 163 et une deuxième extrémité 164. La première extrémité 163 est entrainée en rotation par le premier élément.

Le premier embrayage de sortie 16 peut en outre comprendre un porte-disques de sortie 161 solidaire en rotation d'un deuxième élément. Le deuxième élément peut être le premier élément de sortie.

Le porte-disques de sortie 161 s'étend axialement entre une première extrémité 165 et une deuxième extrémité 166 La première extrémité 165 est solidaire en rotation du deuxième élément.

Le premier embrayage de sortie 16 peut en outre comprendre un ensemble multidisque 162. L'ensemble multidisque 162 peut présenter les mêmes caractéristiques techniques que l'ensemble multidisque 152 de l'embrayage d'entrée 15.

Le premier embrayage de sortie 16 peut décrire une position débrayée et une position embrayée dans laquelle lesdits plateaux et le disque de friction pincent les garnitures de friction de manière à transmettre un couple entre le porte-disques d'entrée 160 et le porte-disques de sortie 161.

L'organe d'actionnement 16a du premier embrayage de sortie 16 peut présenter une partie ou l'ensemble des caractéristiques techniques de l'organe d'actionnement 15a de l'embrayage d'entrée 15.

La deuxième extrémité 164 du porte-disques d'entrée 160 ou la deuxième extrémité 166 du porte-disque de sortie 161 peut comprendre l'au moins un guide 190 s'étendant axialement depuis ladite deuxième extrémité.

Alternativement ou en complément, le deuxième embrayage de sortie 17 peut comprendre un porte-disques d'entrée 170 entrainé en rotation par un premier élément. Le premier élément peut être le support de rotor 10. Le support de rotor 10 peut entrainer en rotation le porte-disques d'entrée 170 via un élément de lien, par exemple le moyeu principal 70.

Le porte-disques d'entrée 170 s'étend axialement entre une première extrémité 173 et une deuxième extrémité 174. La première extrémité 173 est entrainée en rotation par le premier élément.

Le deuxième embrayage de sortie 17 peut en outre comprendre un porte-disques de sortie 171 solidaire en rotation d'un deuxième élément. Le deuxième élément peut être le deuxième élément de sortie.

Le porte-disques de sortie 171 s'étend axialement entre une première extrémité 175 et une deuxième extrémité 176 La première extrémité 175 est solidaire en rotation du deuxième élément.

Le deuxième embrayage de sortie 17 peut en outre comprendre un ensemble multidisque 172. L'ensemble multidisque 172 peut présenter les mêmes caractéristiques techniques que l'ensemble multidisque 152 de l'embrayage d'entrée 15 et/ou que l'ensemble multidisque 162 du premier embrayage de sortie 16.

Le deuxième embrayage de sortie 17 peut décrire une position débrayée et une position embrayée dans laquelle lesdits plateaux et le disque de friction pincent les garnitures de friction de manière à transmettre un couple entre le porte-disques d'entrée 170 et le porte-disques de sortie 171.

L'organe d'actionnement 17a du deuxième embrayage de sortie 17 peut présenter une partie ou l'ensemble des caractéristiques techniques de l'organe d'actionnement 15a de l'embrayage d'entrée 15 et/ou de l'organe d'actionnement 16a du premier embrayage de sortie 16.

La deuxième extrémité 174 du porte-disques d'entrée 170 ou la deuxième extrémité 176 du porte-disque de sortie 171 peut comprendre l'au moins un guide 190 s'étendant axialement depuis ladite deuxième extrémité.

Le premier arbre d'entrée 6 de la boîte est couplé en rotation au vilebrequin et est entraîné par lui en rotation lorsque le premier embrayage 15 et le premier embrayage de sortie 16 sont configurés dans une position dite embrayée. Dans cette configuration le rotor 13 peut également fournir un surplus d'énergie à la boite de vitesses.

Le premier arbre d'entrée 6 de la boite est couplé en rotation au rotor 13 et est entraîné par lui en rotation lorsque le premier embrayage 15 est configuré dans une position dite débrayée et le premier embrayage de sortie 16 est configuré dans la position embrayée. Le premier arbre de la boite est alors uniquement entrainé par le rotor. Dans cette configuration, la machine électrique peut aussi agir comme un frein et être dans un mode de récupération d'énergie.

De manière analogue, le deuxième arbre d'entrée 9 de la boite est couplé en rotation au vilebrequin et est entraîné par lui en rotation lorsque le premier embrayage 15 et le deuxième embrayage de sortie 17 sont configurés dans une position dite embrayée.

Le deuxième arbre d'entrée 9 de la boite est couplé en rotation au rotor 13 et est entraîné par lui en rotation lorsque le premier embrayage 15 est configuré dans une position dite débrayée et le deuxième embrayage de sortie 17 est configuré dans la position embrayée. Le deuxième arbre de la boite est alors uniquement entrainé par le rotor.

Lorsque les premier et deuxième embrayages de sortie 16, 17 sont en configuration débrayée et que l'embrayage d'entrée 15 est en configuration embrayée, le rotor 13 peut être entrainé par le moteur à combustion interne. Le moteur électrique est alors dans un mode de récupération d'énergie.

Dans l'exemple considéré aux figures 1 et 2, le premier embrayage de sortie 16 est, par exemple, agencé pour engager les rapports impairs de la boite de vitesses et le deuxième embrayage de sortie 17 est, par exemple, agencé pour engager les rapports pairs et la marche arrière de la boite de vitesses. Alternativement, les rapports pris en charge par lesdits premier embrayage de sortie 16 et deuxième embrayage de sortie 17 peuvent être respectivement inversés.

Les embrayages sont agencés pour transmettre alternativement une puissance dite d'entrée - un couple et une vitesse de rotation - du moteur à combustion interne, à l'un des deux arbres d'entrée de boite de vitesses, en fonction de la configuration respective de chaque embrayage de sortie 16, 17 et de l'embrayage d'entrée 15. Le dispositif est alors en mode dit « direct ». L'embrayage d'entrée 15 peut également transmettre un couple vers le moteur thermique, le dispositif est alors en mode dit « rétro ».

Les embrayages de sortie 16, 17 peuvent être agencés pour ne pas être simultanément dans la même configuration embrayée. En revanche, ils peuvent simultanément être configurés dans leur position débrayée.

Dans l'exemple considéré, le dispositif 1 comprend en outre un moyeu principal 70. Ledit moyeu principal 70 peut être relié sélectivement au premier élément de sortie 5 et au deuxième élément de sortie 8, respectivement, par le premier et deuxième embrayages de sortie 16, 17.

Dans l'exemple considéré, le support de rotor 10 peut comprendre une face inférieure 100 en regard du moyeu principal 70. Ladite face inférieure 10 peut comprendre une première partie 101 et une deuxième partie 102. La première partie 101 peut être en liaison pivot avec le moyeu principal 70.

La liaison pivot entre la première partie 101 de la face inférieure 100 du support de rotor 10 et le moyeu principal 70 peut être une combinaison d'une liaison rotule et d'une liaison appui-plan.

Le moyeu principal 70 peut comprendre une face externe 71 au moins partiellement en regard avec la face inférieure 100 du support de rotor 10. La face externe 71 peut présenter un premier épaulement 72. Le premier épaulement 72 peut s'étendre, par exemple de manière continue, circonférentiellement autour de l'axe de rotation X.

En outre, la face inférieure 100 du support de rotor 10 peut présenter un deuxième épaulement 103. Le deuxième épaulement 103 peut s'étendre, par exemple de manière continue, circonférentiellement autour de l'axe de rotation X. le deuxième épaulement 103 peut être plus particulièrement situé sur la première partie 101 de la face inférieure 100.

La liaison appui-plan entre le support de rotor et le moyeu principal peut être réalisée par un contact entre le premier épaulement et le deuxième épaulement. Ce contact permet de supprimer les mêmes degrés de liberté entre le support de rotor et le moyeu principal qu'une liaison appui-plan.

Dans l'exemple considéré, le dispositif 1 de transmission de couple peut en outre comprendre au moins un organe de fixation adapté pour maintenir la liaison appui-plan entre la première partie 101 de la face inférieure 100 du support de rotor 10 et le moyeu principal 70. Plus particulièrement, l'au moins un organe de fixation est adapté pour maintenir la liaison appui-plan entre le deuxième épaulement 103 de la première partie 101 de la face inférieure 100 du support de rotor 10 et le premier épaulement 72 du moyeu principal 70.

Ce(s) organe(s) de fixation peuv(en)t être choisi(s) parmi des vis, des écrous ou des rivets réparties sur un pourtour de l'axe de rotation X. Ce(s) organe(s) de fixation est(sont) disposé(s) radialement au même niveau que le moyeu principal 70. Ce(s) organe(s) de fixation permette(nt) de monter et/ou démonter facilement le dispositif 1.

Dans l'exemple considéré, le moyeu principal 70 peut présenter un premier diamètre D1 et la face externe 71 peut présenter une première longueur axiale L1.

Dans l'exemple considéré, le support de rotor 10 peut présenter un deuxième diamètre D2 et la face inférieure 100 dudit support de rotor 10 peut présenter une deuxième longueur axiale L2.

La première longueur axiale L1 peut être au moins deux fois supérieure à la deuxième longueur axiale L2. Plus particulièrement, la première longueur axiale L1 peut être au moins trois fois supérieure à la deuxième longueur axiale L2.

Le premier diamètre D1 peut être inférieur au deuxième diamètre D2. Cette différence entre le premier diamètre D1 et le deuxième diamètre D2 permet d'obtenir un jeu entre le moyeu principal 70 et le support de rotor 10. C'est la différence de diamètre associée à la différence de longueur entre le moyeu principal 70 et le support de rotor 10 qui permet d'obtenir une liaison rotule entre les deux éléments.

Dans l'exemple considéré, la deuxième partie 102 de la face inférieure 100 du support de rotor 10 peut être en liaison cannelée 110 avec le moyeu principal 70. Ainsi, le support de rotor est solidaire en rotation du moyeu principal 70.

L'addition de la liaison pivot, entre la première partie 101 de la face inférieure 100 du support de rotor 10 et le moyeu principal 70, avec la solidarisation en rotation, de la deuxième partie 102 de la face inférieure 100 du support de rotor 10 avec le moyeu principal 70, permet d'obtenir une liaison encastrement entre le support de rotor 10 et le moyeu principal 70. L'addition de ces deux liaisons permet de transmettre le couple entre ledit support de rotor 10 et le moyeu principal 70 tout en maintenant un lien robuste entre les deux éléments.

Dans l'exemple considéré, le support de rotor 10 peut en outre comprendre une pièce de transfert 62. La pièce de transfert 62 peut être située radialement sous, ou radialement interne à, l'embrayage d'entrée. La pièce de transfert peut être également située sous, ou radialement à l'intérieur de, l'organe d'actionnement 15a de l'embrayage d'entrée 15. La pièce de transfert 62 peut être, pour le passage du couple, situé entre la paroi transversale 60 et les premier et deuxième embrayages de sortie 16, 17. La pièce de transfert 62 du support de rotor 10 peut délimiter en partie la chambre étanche.

La pièce de transfert 62 et la paroi transversale 60 peuvent être une pièce unique. Alternativement la pièce de transfert 62 et la paroi transversale 60 sont deux pièces distinctes. La pièce de transfert 62 et la paroi transversale 60 peuvent être soudées l'une à l'autre.

Dans l'exemple considéré, la première partie 101 et la deuxième partie 102 de la face inférieure 100 du support de rotor 10 sont situés sur la pièce de transfert 62.

Dans l'exemple considéré, les premier et deuxième éléments de sortie 5, 8 comprennent respectivement un premier et un deuxième voiles 25, 28 relié par une liaison, par exemple cannelée, respectivement au premier et au deuxième arbre d'entrée 6, 9 de la boite de vitesses. Le deuxième arbre d'entrée 9 de la boîte est creux et entoure le premier arbre d'entrée 6 de la boîte.

Dans l'exemple considéré, la machine électrique 12 est une machine synchrone à aimants permanents.

Le dispositif 1 pourrait en outre comprendre un étage de ressorts (non représenté) entre l'élément d'entrée 2 et le rotor 12.

Dans l'exemple considéré, le dispositif 1 comprend également un élément intermédiaire 35 de transmission de couple entre l'élément d'entrée 2 et l'embrayage d'entrée 15.

Dans l'exemple considéré, le dispositif 1 peut définir une chambre étanche 45 remplie d'huile dans laquelle est disposé l'ensemble des embrayages. Les embrayages sont donc tous de type humide.

La chambre étanche 45 pourrait être délimitée en partie par le support de rotor 10 et par l'élément intermédiaire 35Le dispositif 1 peut comprendre en outre une paroi fixe 50, par exemple solidaire du stator 14 et ainsi fixe en rotation. La paroi est par exemple vissée sur une partie solidaire du stator. La paroi 50 est sensiblement transversale.

Dans l'exemple considéré, l'élément intermédiaire 35 est centré sur la paroi fixe 50 au moyen d'un roulement à aiguilles 51 disposé à la périphérie radialement intérieure de la paroi fixe.

Un moyen de guidage en rotation ici, à nouveau un roulement à aiguilles 53, est prévu pour caler axialement l'élément intermédiaire 35 sur le deuxième élément de sortie 8. Le même moyen de guidage est prévu entre les deux éléments de sortie 5 et 8.

Dans l'exemple considéré, l'embrayage d'entrée 15 est décalé des embrayages de sortie 16, 17 en éloignement de l'élément d'entrée 2.

Dans l'exemple considéré, le support de rotor 10 peut comprendre une paroi transversale 60, cette paroi étant d'un même côté axial que tous les embrayages 15, 16, 17. Cette paroi transversale 60 peut également être du même côté axial que les organes d'actionnement. Le support de rotor 10 encapsule à la fois les embrayages et les organes d'actionnement.

Dans l'exemple considéré, l'élément intermédiaire 35 est également porté radialement par une cloison transversale 61. La cloison transversale 61 est en outre adaptée pour centrer l'élément intermédiaire 35. L'élément intermédiaire 35 peut être centré et porté radialement au moyen d'un organe de roulement, ici un roulement à aiguilles disposé entre une extrémité de la cloison transversale 61 et un rebord du support de rotor 10.

La cloison transversale 61 peut être située axialement entre l'embrayage d'entrée 15 d'une part et le premier embrayage de sortie 16 et le deuxième embrayage de sortie 17 d'autre part. La cloison transversale 61 peut être liée à l'élément intermédiaire 35 d'une part et au support de rotor 10 d'autre part.

La cloison transversale 61 peut être fixée, par exemple par soudage, ou uniquement entrainée en rotation par l'élément d'entrainement 35.

Pour d'avantage de détails concernant les embrayages 15, 16, 17 et les organes d'actionnement associés on pourra se rapporter à la demande de brevet français n° 1756978 déposée le 21 juillet 2017 au nom de Valeo Embrayages.

Dans l'exemple considéré, l'élément intermédiaire 35 comprend :
- un moyeu cannelé 75 pour le passage du couple entre l'intérieur et l'extérieur de la chambre étanche,
- une jupe cylindrique 76 pour l'entrainement de l'embrayage d'entrée 15,
- une portion de connexion 77 entre le moyeu cannelé et la jupe cylindrique.

La jupe cylindrique 76 s'étend radialement entre le rotor 13 et les embrayages de sortie 16, 17. Cette jupe cylindrique permet de transmettre le couple du côté du moteur thermique vers le côté de la boite de vitesses.

Dans l'exemple considéré, la portion de connexion 77 et la jupe cylindrique 76 sont d'un seul tenant relié en rotation au moyeu cannelé 77.

Dans l'exemple considéré, le distributeur fixe 80 qui porte le support de rotor 10, via le moyeu principal 70, est fixé sur une partie fixe de la boite de vitesses.

La figure 2 présente le dispositif 1 divisé en deux sous-ensembles indépendants :
- un premier sous-ensemble 98 apte à être connecté au moteur à combustion interne comprenant l'élément d'entrée 2, le premier embrayage de sortie 16 et le deuxième embrayage de sortie 17 et les organes d'actionnement 16a, 17a associés, le moyeu principal 70 et un premier carter apte à être fixé sur une partie fixe du moteur thermique, et
- un deuxième sous-ensemble 96 apte à être connecté à la boite de vitesses comprenant la machine électrique 12, l'embrayage d'entrée 15 et l'organe d'actionnement 15a associé, le support de rotor 10 et un deuxième carter 99 apte à être fixée sur une partie fixe de la boite de vitesses,
   l'élément intermédiaire 35, partagé entre les deux sous-ensembles 98, 96, comporte une liaison interne cannelée pour le couplage en rotation des deux sous-ensembles.

Les sous-ensembles peuvent être manipulés séparément lors de l'assemblage.

## Revendications

1. Dispositif (1) de transmission de couple, notamment pour véhicule automobile, comprenant :
- un élément d'entrée de couple (2), apte à être couplé en rotation à un vilebrequin d'un moteur à combustion interne,
- un premier élément de sortie de couple (5), apte à être couplé en rotation à un premier arbre d'entrée d'une boîte de vitesses (6),
- une machine électrique tournante (12) comprenant un stator (14) et un rotor (13) disposé au sens de la transmission de couple, entre l'élément d'entrée (2) et le premier élément de sortie (5),
- un support de rotor (10) supportant radialement le rotor (13), le support de rotor étant relié sélectivement à l'élément d'entrée par un embrayage d'entrée (15),
- un moyeu principal (70), ledit moyeu principal étant relié au premier élément de sortie (5) par un premier embrayage de sortie (16), où le support de rotor (10) comprend une face inférieure (100) en regard du moyeu principal (70), ladite face inférieure comprenant une première partie (101) et une deuxième partie (102),
le dispositif de transmission de couple (1) étant **caractérisé en ce que** la première partie (101) de la face inférieure du support de rotor (10) est en liaison pivot avec le moyeu principal (70) et la deuxième partie (102) de la face inférieure du support de rotor (10) est en liaison cannelée avec le moyeu principal (70),
le dispositif de transmission de couple (1) comprenant en outre un élément intermédiaire (35) de transmission de couple entre l'élément d'entrée (2) et l'embrayage d'entrée (15), l'élément intermédiaire (35) étant centré et porté radialement par une cloison (61) transversale au moyen d'un organe de roulement.

2. Dispositif (1) selon la revendication précédente, dans lequel l'embrayage d'entrée (15) et le premier embrayage de sortie (16) sont de type multidisque, chacun des embrayages ayant un organe d'actionnement associé.

3. Dispositif (1) selon l'une quelconque des revendications précédentes, comprenant en outre un deuxième élément de sortie de couple (8), apte à être couplé en rotation à un deuxième arbre d'entrée d'une boîte de vitesses (9), le deuxième élément de sortie étant disposé en parallèle du premier élément de sortie au sens de la transmission de couple.

4. Dispositif (1) selon la revendication précédente, dans lequel le rotor (13) de la machine électrique tournante (12) est disposé au sens de la transmission de couple, entre l'élément d'entrée (2) d'une part et les premier et deuxième éléments de sortie (5, 8) d'autre part,
et dans lequel le moyeu principal (70) est relié sélectivement aux premier et deuxième éléments de sortie (5, 8), respectivement, par le premier et un deuxième embrayages de sortie (16, 17), de type multidisque, chacun des embrayages ayant un organe d'actionnement associé.

5. Dispositif (1) selon l'une quelconque des revendications précédentes, dans lequel la liaison pivot entre la première partie (101) de la face inférieure (100) du support de rotor (10) et le moyeu principal (70) est une combinaison d'une liaison rotule et d'une liaison appui-plan.

6. Dispositif (1) selon la revendication précédente, dans lequel le moyeu principal (70) comprend une face externe (71) au moins partiellement en regard avec la face inférieure (100) du support de rotor (10), ladite face externe présentant un premier épaulement (72),
dans lequel la face inférieure (100) du support de rotor (10) présente un deuxième épaulement (103),
la liaison appui-plan étant réalisée par un contact entre le premier épaulement (72) et le deuxième épaulement (103).

7. Dispositif (1) selon l'une des deux revendications précédentes, comprenant en outre un organe de fixation adapté pour maintenir la liaison appui-plan entre la première partie (101) de la face inférieure (100) du support de rotor (10) et le moyeu principal (70).

8. Dispositif (1) selon l'une des trois revendications précédentes, dans lequel le moyeu principal (70) présente un premier diamètre (D1) et comprend une face externe (71) au moins partiellement en regard avec la face inférieure (100) du support de rotor (10), ladite face externe présentant une première longueur axiale (L1),
dans lequel le support de rotor (10) présente un deuxième diamètre (D2) et la face inférieure (100) dudit support de rotor présente une deuxième longueur axiale (L2),
la première longueur axiale (L1) étant au moins deux fois supérieure à la deuxième longueur axiale (L2) et le premier diamètre (D1) étant inférieur au deuxième diamètre (D2).

9. Dispositif (1) selon la revendication 1, dans lequel l'organe de roulement est un roulement à aiguilles, disposé à la périphérie radialement inférieure de la cloison.

10. Dispositif (1) selon la revendication 1, dans lequel la cloison (61) transversale est située axialement entre l'embrayage d'entrée d'une part et le premier embrayage de sortie (16) d'autre part.

11. Dispositif (1) selon l'une quelconque des deux revendications précédentes, dans lequel un moyen d'étanchéité est disposé entre l'extrémité radialement inférieure de la cloison (61) et le support de rotor (10).

12. Dispositif (1) selon l'une quelconque des revendications précédentes, dans lequel le moyeu principal (70) est porté radialement par un distributeur fixe (80) au moyen d'au moins un organe de roulement, notamment un roulement à aiguilles.

13. Dispositif (1) selon l'une quelconque des revendications précédentes, dans lequel le support de rotor (10) comprend en outre une paroi transversale (60), ladite paroi étant d'un même côté axial que l'embrayage d'entrée (15) et le premier embrayage de sortie (16).

14. Dispositif (1) selon l'une quelconque des revendications précédentes, dans lequel les embrayages (15, 16) sont humides, et sont contenus dans au moins une chambre étanche remplie d'un fluide, notamment d'huile.

## Patentansprüche

1. Vorrichtung (1) zur Übertragung eines Drehmoments, insbesondere für ein Kraftfahrzeug, umfassend:
- ein Drehmomenteingangselement (2), das drehbar mit einer Kurbelwelle eines Verbrennungsmotors gekoppelt sein kann,
- ein erstes Drehmomentausgangselement (5), das drehbar mit einer ersten Eingangswelle eines Getriebes (6) gekoppelt sein kann,
- eine rotierende elektrische Maschine (12) mit einem Stator (14) und einem Rotor (13), der in Richtung der Drehmomentübertragung zwischen dem Eingangselement (2) und dem ersten Ausgangselement (5) angeordnet ist,
- einen Rotorträger (10), der den Rotor (13) radial trägt, wobei der Rotorträger durch eine Eingangskupplung (15) wahlweise mit dem Eingangselement verbunden ist,
- eine Hauptnabe (70), wobei die Hauptnabe durch eine erste Ausgangskupplung (16) mit dem ersten Ausgangselement (5) verbunden ist,
wobei der Rotorträger (10) eine Unterseite (100) umfasst, die der Hauptnabe (70) zugewandt ist, wobei die Unterseite einen ersten Teil (101) und einen zweiten Teil (102) umfasst,
wobei die Drehmomentübertragungsvorrichtung (1) **dadurch gekennzeichnet ist, dass** der erste Teil (101) der Unterseite des Rotorträgers (10) in Schwenkverbindung mit der Hauptnabe (70) steht und der zweite Teil (102) der Unterseite des Rotorträgers (10) in Keilnutverbindung mit der Hauptnabe (70) steht, wobei die Drehmomentübertragungsvorrichtung (1) ferner ein Zwischenelement (35) zur Drehmomentübertragung zwischen dem Eingangselement (2) und der Eingangskupplung (15) umfasst, wobei das Zwischenelement (35) zentriert ist und von einer quer verlaufenden Wand (61) mit Hilfe eines Wälzlagers radial getragen wird.

2. Vorrichtung (1) nach dem vorangehenden Anspruch, wobei die Eingangskupplung (15) und die erste Ausgangskupplung (16) vom Mehrscheibentyp sind, wobei jede der Kupplungen ein zugehöriges Betätigungsorgan aufweist.

3. Vorrichtung (1) nach einem der vorangehenden Ansprüche, ferner umfassend ein zweites Drehmomentausgangselement (8), das mit einer zweiten Eingangswelle eines Getriebes (9) drehbar koppelbar ist, wobei das zweite Ausgangselement in der Drehmomentübertragungsrichtung parallel zum Ausgangselement angeordnet ist.

4. Vorrichtung (1) nach dem vorangehenden Anspruch, wobei der Rotor (13) der rotierenden elektrischen Maschine (12) in der Drehmomentübertragungsrichtung zwischen dem Eingangselement (2) einerseits und dem ersten und dem zweiten Ausgangselement (5, 8) andererseits angeordnet ist,
und wobei die Hauptnabe (70) durch die erste und eine zweite Ausgangskupplung (16, 17) vom Mehrscheibentyp wahlweise mit dem ersten und dem zweiten Ausgangselement (5, 8) verbunden ist, wobei jede der Kupplungen ein zugeordnetes Betätigungsorgan aufweist.

5. Vorrichtung (1) nach einem der vorangehenden Ansprüche, wobei die Schwenkverbindung zwischen dem ersten Teil (101) der Unterseite (100) des Rotorträgers (10) und der Hauptnabe (70) eine Kombination aus einer Kugelgelenkverbindung und einer Planargelenkverbindung ist.

6. Vorrichtung (1) nach dem vorangehenden Anspruch, wobei die Hauptnabe (70) eine Außenfläche (71) umfasst, die zumindest teilweise der Unterseite (100) des Rotorträgers (10) zugewandt ist, wobei die Außenfläche eine erste Schulter (72) aufweist,
wobei die Unterseite (100) des Rotorträgers (10) eine zweite Schulter (103) aufweist,
wobei die Planargelenkverbindung durch einen Kontakt zwischen der ersten Schulter (72) und der zweiten Schulter (103) ausgeführt ist.

7. Vorrichtung (1) nach einem der beiden vorangehenden Ansprüche, ferner umfassend ein Befestigungsorgan, das dazu geeignet ist, die Planargelenkverbindung zwischen dem ersten Teil (101) der Unterseite (100) des Rotorträgers (10) und der Hauptnabe (70) aufrechtzuerhalten.

8. Vorrichtung (1) nach einem der drei vorangehenden Ansprüche,
wobei die Hauptnabe (70) einen ersten Durchmesser (D1) aufweist und eine Außenfläche (71) umfasst, die zumindest teilweise der Unterseite (100) des Rotorträgers (10) zugewandt ist, wobei die Außenfläche eine erste axiale Länge (L1) aufweist,
wobei der Rotorträger (10) einen zweiten Durchmesser (D2) aufweist und die Unterseite (100) des Rotorträgers eine zweite axiale Länge (L2) aufweist,
wobei die erste axiale Länge (L1) mindestens doppelt so groß wie die zweite axiale Länge (L2) ist und der erste Durchmesser (D1) kleiner als der zweite Durchmesser (D2) ist.

9. Vorrichtung (1) nach Anspruch 1, wobei das Wälzlager ein Nadellager ist, das am radial unteren Umfang der Trennwand angeordnet ist.

10. Vorrichtung (1) nach Anspruch 1, wobei sich die querverlaufende Trennwand (61) axial zwischen der Eingangskupplung einerseits und der ersten Ausgangskupplung (16) andererseits befindet.

11. Vorrichtung (1) nach einem der beiden vorangehenden Ansprüche, wobei zwischen dem radial unteren Ende der Trennwand (61) und dem Rotorträger (10) ein Dichtungsmittel angeordnet ist.

12. Vorrichtung (1) nach einem der vorangehenden Ansprüche, wobei die Hauptnabe (70) durch einen feststehenden Verteiler (80) mit Hilfe zumindest eines Wälzlagers, insbesondere eines Nadellagers, radial getragen wird.

13. Vorrichtung (1) nach einem der vorangehenden Ansprüche, wobei der Rotorträger (10) ferner eine querverlaufende Wand (60) umfasst, wobei die Wand auf derselben axialen Seite wie die Eingangskupplung (15) und die erste Ausgangskupplung (16) liegt.

14. Vorrichtung (1) nach einem der vorangehenden Ansprüche, wobei die Kupplungen (15, 16) nass sind und in mindestens einer mit einem Fluid, insbesondere Öl, gefüllten dichten Kammer enthalten sind.

## Claims

1. Torque transmission device (1), in particular for a motor vehicle, comprising:
- a torque input element (2) able to be coupled in rotation to a crankshaft of an internal combustion engine,
- a first torque output element (5) able to be coupled in rotation to a first input shaft of a gearbox (6),
- a rotating electric machine (12) comprising a stator (14) and a rotor (13) arranged, in the direction of the torque transmission, between the input element (2) and the first output element (5),
- a rotor support (10) radially supporting the rotor (13), the rotor support being selectively connected to the input element by an input clutch (15),
- a main hub (70), said main hub being connected to the first output element (5) by a first output clutch (16),
wherein the rotor support (10) comprises a lower face (100) facing the main hub (70), said lower face comprising a first part (101) and a second part (102),
the torque transmission device (1) being **characterized in that** the first part (101) of the lower face of the rotor support (10) is in pivot connection with the main hub (70) and the second part (102) of the lower face of the rotor support (10) is in splined connection with the main hub (70), the torque transmission device (1) further comprising an intermediate torque transmission element (35) between the input element (2) and the input clutch (15), the intermediate element (35) being centred and borne radially by a transverse partition (61) by means of a bearing member.

2. Device (1) according to the preceding claim, wherein the input clutch (15) and the first output clutch (16) are of multi-disc type, each of the clutches having an associated actuating member.

3. Device (1) according to either one of the preceding claims, further comprising a second torque output element (8) able to be coupled in rotation to a second input shaft of a gearbox (9), the second output element being arranged in parallel with the first output element in the direction of the torque transmission.

4. Device (1) according to the preceding claim, wherein the rotor (13) of the rotating electric machine (12) is arranged, in the direction of the torque transmission, between the input element (2) on the one hand and the first and second output elements (5, 8) on the other hand,
and wherein the main hub (70) is selectively connected to the first and second output elements (5, 8), respectively, by the first and a second output clutch (16, 17), of multi-disc type, each of the clutches having an associated actuating member.

5. Device (1) according to any one of the preceding claims, wherein the pivot connection between the first part (101) of the lower face (100) of the rotor support (10) and the main hub (70) is a combination of a ball joint connection and of a planar bearing connection.

6. Device (1) according to the preceding claim, wherein the main hub (70) comprises an external face (71) at least partially facing the lower face (100) of the rotor support (10), said external face having a first shoulder (72),
wherein the lower face (100) of the rotor support (10) has a second shoulder (103),
the planar bearing connection being produced by a contact between the first shoulder (72) and the second shoulder (103).

7. Device (1) according to one of the two preceding claims, further comprising a fastening member adapted to maintain the planar bearing connection between the first part (101) of the lower face (100) of the rotor support (10) and the main hub (70).

8. Device (1) according to one of the three preceding claims, wherein the main hub (70) has a first diameter (D1) and comprises an external face (71) at least partially facing the lower face (100) of the rotor support (10), said external face having a first axial length (L1),
wherein the rotor support (10) has a second diameter (D2) and the lower face (100) of said rotor support has a second axial length (L2),
the first axial length (L1) being at least two times greater than the second axial length (L2) and the first diameter (D1) being less than the second diameter (D2).

9. Device (1) according to Claim 1, wherein the bearing member is a needle bearing arranged at the radially lower periphery of the partition.

10. Device (1) according to Claim 1, wherein the transverse partition (61) is situated axially between the input clutch on the one hand and the first output clutch (16) on the other hand.

11. Device (1) according to any one of the two preceding claims, wherein a sealing means is arranged between the radially lower end of the partition (61) and the rotor support (10).

12. Device (1) according to any one of the preceding claims, wherein the main hub (70) is borne radially by a fixed distributor (80) by means of at least one bearing member, in particular a needle bearing.

13. Device (1) according to any one of the preceding claims, wherein the rotor support (10) further comprises a transverse wall (60), said wall being on the same axial side as the input clutch (15) and the first output clutch (16).

14. Device (1) according to any one of the preceding claims, wherein the clutches (15, 16) are wet and are contained in at least one sealed chamber filled with a fluid, in particular with oil.
